Europäisches Patentamt

European Patent Office

Office européen des brevets

(11) Publication number: **0 108 836**
**B1**

(12) EUROPEAN PATENT SPECIFICATION

(45) Date of publication of patent specification: **15.07.87**

(51) Int. Cl.⁴: **C 08 G 69/26**

(21) Application number: **82201432.0**

(22) Date of filing: **12.11.82**

(54) Use of (Co)polytetramethylene-adipamide articles.

(43) Date of publication of application:
**23.05.84 Bulletin 84/21**

(45) Publication of the grant of the patent:
**15.07.87 Bulletin 87/29**

(84) Designated Contracting States:
**BE CH DE FR GB IT LI NL SE**

(56) References cited:
**EP-A-0 038 582**

**Chemical Abstracts, vol. 67, 1967, p. 3177, abstract 33373k, Columbus, Ohio (US); H.P.deHAAN et al.: "Engineering with thermoplastics"**

**Journal of Polymer Science (Polymer Chemistry Edition), vol. 15, 1977, pp. 537-545 Encyclopedia of Polymer Science & Technology, vol. 10, 1969, pp. 460, 469-470 Kunststoff-Handbuch, Hanser Verlag 1966, pp. 495-500**

(73) Proprietor: **STAMICARBON B.V.**
**Mijnweg 1**
**NL-6167 AC Geleen (NL)**

(72) Inventor: **Gaymans, Reinoud Jaap**
**Verdilaan 3**
**NL-7522 KA Enschede (NL)**
Inventor: **Van Asperen, Pieter Jan**
**Boerhaavestraat 21**
**NL-6164 GP Geleen (NL)**

(74) Representative: **Hoogstraten, Willem Cornelis Roeland et al**
**OCTROOIBUREAU DSM Postbus 9**
**NL-6160 MA Geleen (NL)**

## Description

The invention relates to the use of polyamide articles prepared from tetramethylene diamine and adipic acid or a copolymer thereof with up to 20 wt.% of other amide and/or ester forming compounds as part of a fuel engine at elevated temperatures and/or in contact with an environment containing water, fuel methanol, chloride ions or a combination thereof.

Articles made of polyamide materials are commonly known in the art. Such articles can however only be used to a very limited extent for applications in devices which comprise a fuel engine, i.e. in applications in which the articles are destined to be subjected to increased temperatures, to stresses and/or to environments that are generally detrimental for polyamides, e.g. fuel ingredients (such as in particular methanol) and certain ion species (such as in particular combinations of zinc and chloride ions). It has now been found surprisingly that when using certain specific polyamide polymers for said applications, the stated drawbacks are considerably reduced or even avoided.

The polyamides used in accordance with this invention for making articles destined for a device comprising a fuel engine are polymers of tetramethylene diamine and adipic acid or copolymers thereof with other amide and/or ester forming compounds.

The polymers can contain additives normally used with polyamides, such as stabilizers, antioxidants, sliding agents and whitening agents. In addition to tetramethylene diamine and adipic acid, up to 20 wt.% of other amide and/or ester forming compounds may have been incorporated in the polymer.

The polymers may in particular consist of polytetramethylene adipamide (which is referred to as nylon 4,6) as a homopolymer or substantially homopolymer, or of copolymers of tetramethylenediamine and adipic acid with up to 20 wt.% of lactams such as caprolactam and lauric lactam, amino acids, other diamines such as hexamethylene diamine, other dicarboxylic acids such as succinic acid, sebacic acid, isophtalic acid and terephtalic acid and/or diols such as ethyleneglycol.

The used polymers should preferably have a relative viscosity value, as measured at 20°C on a solution in 96% sulfuric acid containing 1 g of polyamide in 100 ml of solution, of at least 2 and most preferably between 3 and 5.

The use of the polyamides in accordance with the invention is specifically recommended for:

Articles which are destined to be subjected to increased temperatures or stress, and in particular articles which are destined to be subjected to stress under increased temperature; this is for instance the case for machine or vehicle parts under the hood of or close to a combustion engine.

Articles which are to be subjected to alcohol containing environments, such as in particular methanol; this is for instance the case for articles which are liable to come in contact with alcohol — in particular methanol — containing engine fuels.

Articles which are to be subjected to zinc and/or chloride ion environments; this is for instance the case for machine or vehicle parts which are placed in an environment where there are also galvanized (Zn) metal parts and a medium which contains chloride ions (for instance see-water; road salts etc).

The use of the polyamides according to the invention is very particularly recommended for articles which are to be subjected to stresses of more than 3 N/mm² under alcohol and/or zinc chloride containing environments.

The expression 'device which comprises a fuel engine' as used in this specification is intended to include any kind of device, either stationary, movable or self propelled which is provided with a fuel engine; such expression is in particular intended to cover fuel engine machines and devices of any kind, and fuel engine bearing or propelled vehicles of any kind such as motor cars, air planes or boats.

The invention will be now elucidated in more detail by means of examples of specific polyamide materials, having regard to the unexpected properties thereof in respect of the scope of articles for which they are to be used in accordance with this invention.

### Example 1

Hot water/steam and thermal stability of injection moulded polyamide test bars.

The hot water/steam stability and the thermal stability of nylon 4.6 was compared to that of nylon 6 and nylon 6.6 using the ISO R 527 standard test method.

Test bars for the tensile strength measurements were injection moulded from samples of the following (unstabilised) polyamides:

Nylon 6: Ultramid $B_3$ (which is a trade mark of BASF)

Nylon 6.6: Ultramid $A_3$ (which is a trade mark of BASF)

Nylon 4.6: a polytetramethylene adipamide sample having a relative viscosity value 3.4.

The test bars were moulded using a standard laboratory injection moulding machine. For nylon 6 and nylon 6.6 the moulding conditions were in accordance with those set forth by the supplier. For nylon 4.6 a nozzle temperature of 310°C and a mould temperature of 80°C were used, and an injection pressure of 1500 atm. and an after injection pressure of 370 atm.

The ageing of the testbars was carried out in an autoclave at 120°C under water/steam atmosphere under nitrogen pressure for the hot water/steam stability test and in an air oven at 120°C for the thermal stability tests; the time after which tensile strength fell to 50% of its initial value was determined. The results of these measurements are represented in table 1.

2

TABLE 1

| | Hot water/steam stability time to decrease of tensile strength to 50% | Thermal stability time to decrease of tensile strength to 50% |
|---|---|---|
| Nylon 4.6 | >7 weeks | >5 weeks |
| Nylon 6.6 | about 5 weeks | about 2½ weeks |
| Nylon 6 | about 4 weeks | about 2½ weeks |

Example 2

Stress crack resistance of injection moulded testbars in zinc chloride environment.

The stress crack resistance in zinc chloride environment of nylon 4.6 was compared to that of nylon 6 and nylon 6.6 using test bars of 120 mm length, 12,7 mm width and 1,6 mm thickness. The testbars were injection moulded from the same materials as used in example 1. The testbars were first conditioned to an equilibrium humidity corresponding to 50% relative humidity at 23°C and subsequently aged in a 50 weight % solution of zinc chloride in water, under a constant loading of 3 $N/mm^2$. The time to fracturing of the testbars was determined. The results of this experiment are represented in table 2.

TABLE 2

| | Fracture times of test bars under 3 $N/mm^2$ in a 50 wt % solution of $ZnCl_2$ |
|---|---|
| Nylon 4.6 | >240 hours |
| Nylon 6 | about 10 minutes |
| Nylon 6.6 | about 15 minutes |

Example 3

Stress crack resistance of injection moulded testbars in methanol environment.

The stress crack resistance in methanol of nylon 4.6 was compared to that of nylon 6 and nylon 6.6 with test bars as used for example 2.

The testbars were first dried at a temperature of 23°C and then provided with a side notch of 1,5 mm (1 mm of Izod-notch and 0,5 mm of razor blade notch). The testbars were subsequently aged in methanol under a constant loading of 24 $N/mm^2$. The time to fracturing was determined. The results of this experiment are represented in table 3.

TABLE 3

| | Fracture times of test bars under 24 $N/mm^2$ in methanol. |
|---|---|
| Nylon 4,6 | >40 hours |
| Nylon 6 | about 15 hours |
| Nylon 6.6 | about 5 hours |

**Claim**

Use of polyamide articles prepared from tetramethylene diamine and adipic acid or a copolymer thereof with up to 20 wt% of other amide and/or ester forming compounds as part of a fuel engine at elevated temperatures and/or in contact with an environment containing water, fuel methanol, chloride ions or a combination thereof.

# 0 108 836

**Patentanspruch**

Verwendung von Polyamid-Gegenständen aus Tetramethyldiamin und Adipinsäure oder einem Copolymer hiervon mit bis zu 20 Gew.% anderer amid- oder esterbildender Verbindungen als Teil eines Hochtemperatur-Verbrennungsmotors und/oder in Kontakt mit einer Umgebung, die Wasser, Kraftstoffmethanol, Chloridionen oder eine Kombination hiervon enthält.

**Revendication**

Utilisation d'articles en polyamides préparés à partir de la tétraméthylène-diamine et de l'acide adipique ou un copolymère de ceux-ci avec jusqu'à 20% en poids d'autres amides et/ou composés formant des esters, faisant partie d'un moteur à carburant à des températures élevées et/ou en contact avec un environnement contenant de l'eau, le carburant méthanol, les ions chlorure ou une combinaison de ceux-ci.